(19) Europäisches Patentamt
European Patent Office
Office européen des brevets

(11) **EP 2 563 094 A2**

## (12) EUROPEAN PATENT APPLICATION

(43) Date of publication:
**27.02.2013  Bulletin 2013/09**

(51) Int Cl.:
*H05B 33/08* [(2006.01)]

(21) Application number: **12177564.7**

(22) Date of filing: **24.07.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **26.08.2011  US 201113218755**
**19.03.2012  US 201213424331**

(71) Applicant: **O2 Micro, Inc.**
**Santa Clara, CA 95054 (US)**

(72) Inventors:
• **Lin, Yung Lin**
  **Palo Alto, CA California 94303 (US)**
• **Kuo, Ching-Chuan**
  **105 Taipei City 105 (TW)**

(74) Representative: **Lippert, Stachow & Partner**
**Patentanwälte**
**Postfach 30 02 08**
**51412 Bergisch Gladbach (DE)**

(54)   **Circuits and methods for driving light sources**

(57)   A controller controls power to a light source. The light source receives a rectified AC voltage and includes a first plurality of LEDs and a second plurality of LEDs. The controller regulates a current flowing through the first plurality of LEDs to a first predetermined level when the rectified AC voltage is within a first predetermined range. The second plurality of LEDs remain off when the rectified AC voltage is within the first predetermined range.

FIG. 8

**Description**

RELATED APPLICATION

This application is a continuation-in-part of the co-pending U.S. Patent Application Serial Number 12/953,353, filed November 23, 2010, and this application is also a continuation-in-part of the co-pending U.S. Patent Application Serial Number 13/218,755, filed August 26, 2011, which itself is a divisional application of the U.S. Patent Application Serial Number 12/968,035, filed December 14, 2010, now U.S. Patent 8,040,071, all of which is hereby incorporated by reference.

BACKGROUND

Light-emitting diodes (LEDs) can be used in many applications such as general lighting. LEDs offer several advantages over traditional light sources such as fluorescent lamps and incandescent lamps. For example, LEDs have significant lower power consumption. Unlike traditional light sources such as incandescent light bulbs that convert significant electrical current heating up the metal filaments to a temperature high enough to generate light, LEDs generate virtually no heat and utilize a fraction of the energy to produce an equivalent lumen of lighting. For example, in a light bulb application, an LED light source may consume less than 7 Watts to produce the same amount of brightness compared to an incandescent light source consuming approximately 60 Watts.

Furthermore, the operational life of an LED can be extended to over 50,000 hours which is significantly longer than the average life of an incandescent bulb, e.g., 5000 hours, and the average life of a fluorescent lamp, e.g., 15,000 hours. Moreover, LEDs contain no mercury or any other hazardous materials or chemicals and emit zero ultra violet (UV) radiation unlike incandescent or fluorescent lamps. The use of the LEDs materially enhances the environment and conserves energy.

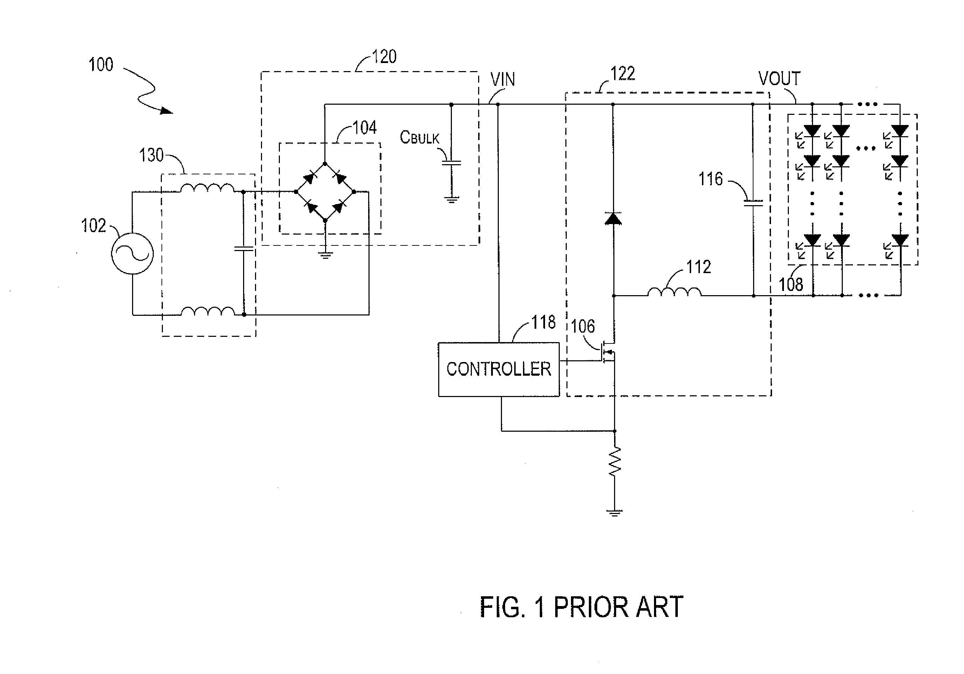

Traditionally, an AC/DC converter converts an AC voltage to a substantial DC voltage to power the LEDs. FIG. 1 illustrates a typical driving circuit 100 for driving a light source, e.g., an LED array 108. The driving circuit 100 includes a bridge rectifier 104 for rectifying the AC voltage to a rectified AC voltage, and an electrolytic capacitor Cbulk having a relatively large size coupled to the bridge rectifier 104 for filtering the rectified AC voltage to provide a substantially constant DC voltage VIN.

The driving circuit 100 further includes a switching-mode DC/DC converter 122 that converts the DC voltage VIN to a DC voltage VOUT across a capacitor 116 to power the LED array 108. In operation, a controller 118 generates an ON/OFF signal to turn a switch 106 fully on and off alternately to control the power for the LED array 108. However, the turn-on and turn-off of the switch 106 generates electromagnetic interference (EMI) noise such that an EMI filter 130 is required to suppress the noise on the power line. In addition, the switching-mode DC/DC converter 122 usually includes elements such as an inductor 112 and a capacitor 116 for energy storage and/or filtering function. Such elements are also relatively large in size and are difficult to be placed into the commercial available lighting fixtures such as E12, E14, E17 LED bulbs or T-5 and T-8 LED light tubes.

SUMMARY

A controller controls power to a light source. The light source receives a rectified AC voltage and includes a first plurality of LEDs and a second plurality of LEDs. The controller regulates a current flowing through the first plurality of LEDs to a first predetermined level when the rectified AC voltage is within a first predetermined range. The second plurality of LEDs remain off when the rectified AC voltage is within the first predetermined range.

BRIEF DESCRIPTION OF THE DRAWINGS

Features and advantages of embodiments of the claimed subject matter will become apparent as the following detailed description proceeds, and upon reference to the drawings, wherein like numerals depict like parts, and in which:

FIG. 1 illustrates a conventional driving circuit for driving a light source.

FIG. 2 shows a driving circuit, in accordance with one embodiment of the present invention.

FIG. 3 shows an example of a rectified AC voltage $V_{REC}$, in accordance with one embodiment of the present invention.

FIG. 4 shows the relationship between system power efficiency and a conduction angle, in accordance with one embodiment of the present invention.

FIG. 5 shows the relationship between a system power factor and a conduction angle, in accordance with one embodiment of the present invention.

FIG. 6 shows a driving circuit, in accordance with another embodiment of the present invention.

FIG. 7 shows an example of a rectified AC voltage $V_{REC1}$ and a rectified AC voltage $V_{REC2}$, in accordance with another embodiment of the present invention.

FIG. 8 shows a driving circuit, in accordance with another embodiment of the present invention.

FIG. 8A shows examples of signal waveforms associated with the driving circuit in FIG. 8, in accordance with one embodiment of the present invention.

FIG. 9 shows a driving circuit, in accordance with another embodiment of the present invention.

FIG. 10 shows an example of the rectified voltage and a current from the rectifier.

FIG. 11 shows a driving circuit, in accordance with another embodiment of the present invention.

FIG. 12 shows a driving circuit, in accordance with another embodiment of the present invention.

FIG. 13A-FIG. 13F show examples of a TRIAC dimmer in FIG. 11 and FIG. 12.

FIG. 14 shows an example of the rectified voltage and a current from the rectifier.

DETAILED DESCRIPTION

Reference will now be made in detail to the embodiments of the present invention. While the invention will be described in conjunction with these embodiments, it will be understood that they are not intended to limit the invention to these embodiments. On the contrary, the invention is intended to cover alternatives, modifications and equivalents, which may be included within the spirit and scope of the invention as defined by the appended claims.

Furthermore, in the following detailed description of the present invention, numerous specific details are set forth in order to provide a thorough understanding of the present invention. However, it will be recognized by one of ordinary skill in the art that the present invention may be practiced without these specific details. In other instances, well known methods, procedures, components, and circuits have not been described in detail as not to unnecessarily obscure aspects of the present invention.

Embodiments in accordance with the present invention provide circuits and methods for driving one or more light sources such as a light-emitting diode (LED) light source. By way of example, the circuits and methods in accordance with embodiments of the present invention can be used in lighting fixtures including, but are not limited to, E12, E14, E17 light bulbs or T-5 and T-8 tubes. In one embodiment, the circuits include an AC/DC linear converter. Advantageously, the AC/DC linear converter in accordance with embodiments of the present invention can achieve relatively high power efficiency as well as relatively high power factor. In one embodiment, the AC/DC linear converter can be mounted on a printed circuit board (PCB) which is relatively thin, e.g., having a thickness of less than 6.0mm, making it easier to be fit into lighting fixtures such as E12, E14, E17 light bulbs or T-5 and T-8 tubes. Moreover, unlike the conventional AC/DC converter cooperating with the switching-mode DC/DC converter, the AC/DC linear converter in accordance with embodiments of the present invention does not generate electromagnetic interference (EMI) noise, and thus does not require EMI filters. In addition, the bulky circuitry components such as inductors in the conventional switching mode DC/DC converter can be omitted. Therefore, the circuits and methods for driving one or more light sources in accordance with embodiments of the present invention achieve improved efficiency and reduced cost.

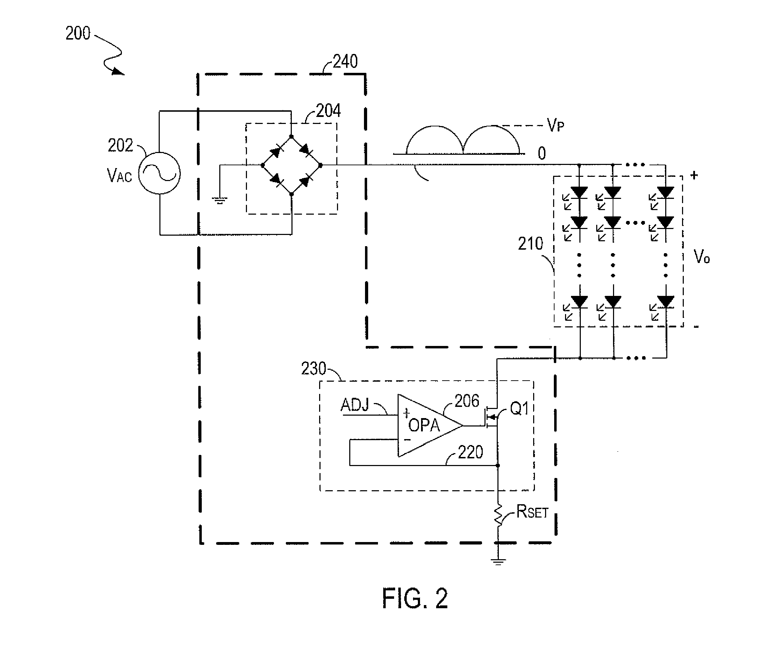

FIG. 2 shows a driving circuit 200, in accordance with one embodiment of the present invention. In the example of FIG. 2, the driving circuit 200 includes an AC/DC linear converter 240 for receiving an AC voltage and controlling a current flowing through a light source. For illustrative purposes, the light source in FIG. 2 includes an LED array 210 having a plurality of LED strings. The light source can be other types of light sources. In the example of FIG. 2, the AC/DC linear converter 240 includes a rectifier (e.g., a bridge rectifier 204) for rectifying an AC voltage $V_{AC}$ to a rectified AC voltage $V_{REC}$, a switch Q1 coupled to the LED array 210 in series for controlling a current through the LED array 210 according to a predetermined current reference, control circuitry (e.g., an operational amplifier 206) for controlling the switch Q1 linearly, and a current sensor (e.g., a sensing resistor $R_{SET}$) for sensing the current flowing through the light source and providing a sensing signal 220 to the control circuitry. In one embodiment, the switch Q1 is a power metal-oxide-semiconductor field-effect transistor (MOSFET).

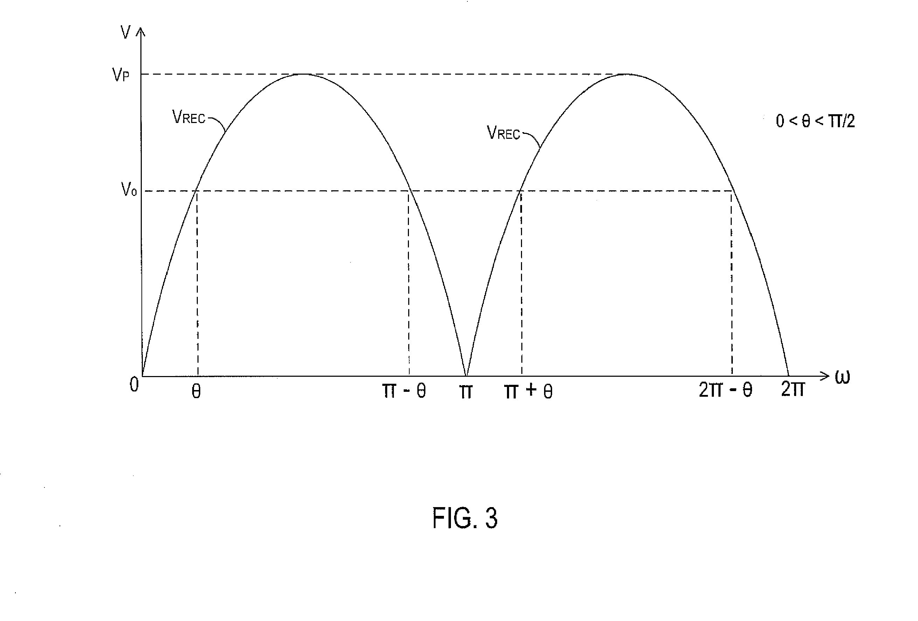

FIG. 3 shows an example of the rectified AC voltage $V_{REC}$ during the period 0 to $2\pi$ of the $V_{AC}$, and is described in combination with FIG. 2. In one embodiment, the rectified AC voltage $V_{REC}$ is a periodic voltage signal. The rectified AC voltage $V_{REC}$ has a peak voltage $V_P$. The forward voltage $V_O$ of the LED array 210 intersects with the rectified AC voltage $V_{REC}$. The LED array 210 is powered on to its rating when the voltage across the LED array 210 is greater than the forward voltage $V_O$ of the LED array 210. More specifically, in the example of FIG. 3, the LED array 210 is powered on to its rating and is regulated when the rectified AC voltage $V_{REC}$ is greater than the forward voltage $V_O$ of the LED array 210. In one embodiment, the voltage drop across the sensing resistor $R_{SET}$ is relatively small and can be ignored.

Thus, in operation, the LED array 210 is powered on and regulated depending on the level of the rectified AC voltage $V_{REC}$. When the LED array 210 is powered on, e.g., when the rectified AC voltage $V_{REC}$ is greater than the forward voltage $V_O$ of the LED array 210, the control circuitry controls the switch Q1 linearly by comparing a sensing signal 220 indicative of the current through the LED array 210 to a reference signal ADJ indicative of the predetermined current reference such that the current through the LED array 210 is adjusted to the predetermined current reference.

By way of example, the operational amplifier 206 compares the sensing signal 220 to the reference signal ADJ and generates an error signal to control the switch Q1 linearly. A current sensor, e.g., a sensing resistor $R_{SET}$ is coupled to the LED array 210 in series and for providing the sensing signal 220.

In the example of FIG. 3, the rectified AC voltage $V_{REC}$ is a half-wave sinusoidal voltage signal. However, the rectified AC voltage $V_{REC}$ is not limited to the example in FIG. 3. The rectified AC voltage can be other periodic signals so long as the forward voltage $V_O$ of the light source, e.g., the LED array 210, intersects with the rectified AC voltage assuming that the voltage drop across the sensing resistor $R_{SET}$ can be ignored. Thus, the rectified AC voltage has a peak voltage $V_P$ greater than the forward voltage $V_O$ of the light source and has a valley voltage less than the forward voltage $V_O$ of the light source.

In one embodiment, the current $I_O$ flowing through the LED array 210 can be given by:

$$I_O = ADJ/ R_{SET}, \qquad\qquad (1)$$

where ADJ represents the voltage level of the reference signal ADJ and $R_{SET}$ represents the resistance of the sensing resistor $R_{SET}$. The forward voltage $V_O$ of the LED array 210 can be given by:

$$V_0 = V_p \times Sin\theta , \qquad\qquad (2)$$

where $V_P$ represents the peak voltage of the rectified AC voltage $V_{REC}$, and $\theta$ is the conduction angle at which the rectified AC voltage $V_{REC}$ is substantially equal to the forward voltage $V_O$ of the LED array 210. In one embodiment, "substantially equal to" means that at the conduction angle $\theta$, the rectified AC voltage $V_{REC}$ may be slightly different from the forward voltage $V_O$ due to the voltage drop across the switch Q1 and the sensing resistor $R_{SET}$ and the non-ideality of the circuitry components in practical applications.

Therefore, the average input power $P_{in}$ during the period 0 to $\pi$ can be given by:

$$P_{in} = \frac{1}{\pi} \int_{\theta}^{\pi-\theta} I_0 \times V_p \times Sin\theta d\theta \quad (0 < \theta < \frac{\pi}{2})$$

$$= \frac{1}{\pi} \times I_0 \times V_p \times (-\cos\theta)\big|_{\theta}^{\pi-\theta} \quad (0 < \theta < \frac{\pi}{2})$$

$$= \frac{1}{\pi} \times I_0 \times V_p \times 2 \times \cos\theta \quad (0 < \theta < \frac{\pi}{2}). \qquad (3)$$

The output power $P_{out}$ of the LED array 210 during the period 0 to $\pi$ can be given by:

$$P_{out} = \frac{I_0 \times V_0 \times (\pi - \theta - \theta)}{\pi} \quad (0 < \theta < \frac{\pi}{2})$$

$$= I_0 \times V_0 \times (1 - \frac{2 \times \theta}{\pi}) \quad (0 < \theta < \frac{\pi}{2}). \qquad (4)$$

According to equations (3) and (4), the power efficiency $\eta$ of the AC/DC linear converter 240 can be calculated by:

$$\eta = \frac{P_{out}}{P_{in}} = \frac{I_0 \times V_0 \times (1 - \frac{2 \times \theta}{\pi})}{\frac{1}{\pi} \times I_0 \times V_0 \times 2 \times Cos\theta} \qquad (0 < \theta < \frac{\pi}{2})$$

$$= \frac{I_0 \times V_p \times Sin\theta \times (1 - \frac{2 \times \theta}{\pi})}{\frac{1}{\pi} \times I_0 \times V_p \times 2 \times Cos\theta} \qquad (0 < \theta < \frac{\pi}{2})$$

$$= \frac{1}{2} \times \tan\theta \times (\pi - 2\theta) \qquad (0 < \theta < \frac{\pi}{2}). \qquad (5)$$

In addition, the total power dissipation $P_{loss}$, e.g., on the switch Q1 and sensing resistor $R_{SET}$, during the period 0 to $\pi$ can be obtained by:

$$P_{loss} = P_{in} - P_{out} = [(1/\eta) - 1]P_{out}. \qquad (6)$$

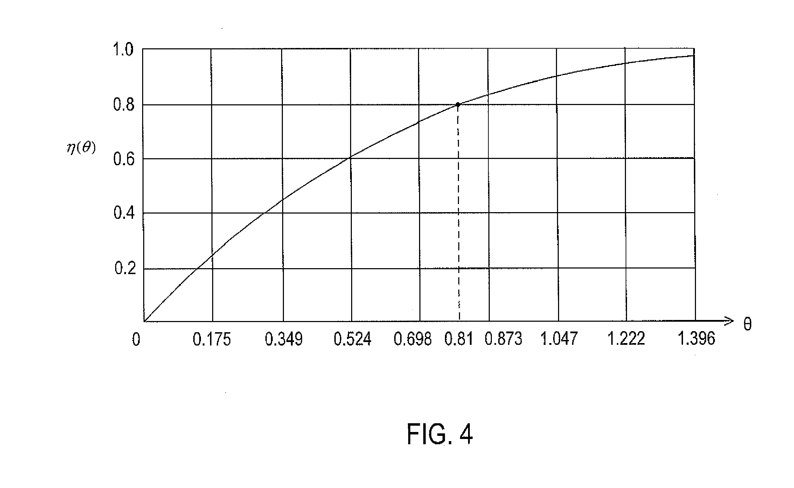

According to equitation (5), the relationship between the power efficiency $\eta$ and the conduction angle $\theta$ is shown in the example of FIG. 4.

Therefore, according to a given power efficiency $\eta$, the conduction angle $\theta$ can be obtained accordingly based on equation (5). If the peak voltage $V_P$ of the rectified AC voltage $V_{REC}$ is known, the forward voltage $V_O$ can be calculated according to equation (2). Accordingly, to design a lamp having a predetermined output power, e.g., $P_{out}$=5W, the current $I_O$ flowing through the LED array 210 can be calculated according to equation (4). Thus, the number of LEDs required to generate output power of 5W can be calculated if the current rating of an LED is known.

By way of example, to design an LED lamp with 5 Watts output power $P_{out}$ and having a power efficiency $\eta$ of 80%, assuming that the AC power source 202 generates a 60 Hz 110V AC voltage $V_{AC}$, and the peak voltage $V_P$ of the rectified AC voltage $V_{REC}$ is 155V, then the conduction angle $\theta$ is approximately 0.81 (46.43 degree) according to equation (5). According to equation (2), the forward voltage $V_O$ can be given by: 155*sin(0.81) $\approx$ 112V. According to equation (4), the current $I_O$ is approximately 92mA. Assuming that an LED has a forward voltage of 3.2V, the number of LEDs in each LED string of the LED array 210 can be given by: 112V/3.2V=35. If an LED has a rated current of 20mA, then the LED array 210 can include 5 LED strings and each LED string includes 35 LEDs. The power dissipation $P_{loss}$, e.g., on the power switch Q1 and the sensing resistor $R_{SEN}$ is: $P_{loss} = P_{in} - P_{out} = [(1/\eta)-1]P_{out}$ = 1.25 W.

Furthermore, the power factor PF of the system can be calculated by:

$$PF = \frac{P_{in}}{V_{rms} \times I_{rms}}, \qquad (7)$$

where $P_{in}$ represents the average input power which can be obtained according to equation (3), $V_{rms}$ represents the root-mean-square of the input voltage $V_{REC}$ and $I_{rms}$ represents the root-mean-square of the input current to the LED array 210. $V_{rms}$ and $I_{rms}$ can be given by:

$$V_{rms} = \frac{V_P}{\sqrt{2}} \; ; \qquad\qquad (8)$$

$$I_{rms} = I_0 \times \sqrt{1 - \frac{2 \times \theta}{\pi}} \; . \qquad\qquad (9)$$

Therefore, the power factor PF can be obtained by:

$$PF = \frac{2 \times \sqrt{2}}{\pi} \times \frac{Cos\theta}{\sqrt{1 - \frac{2 \times \theta}{\pi}}} \; . \qquad\qquad (10)$$

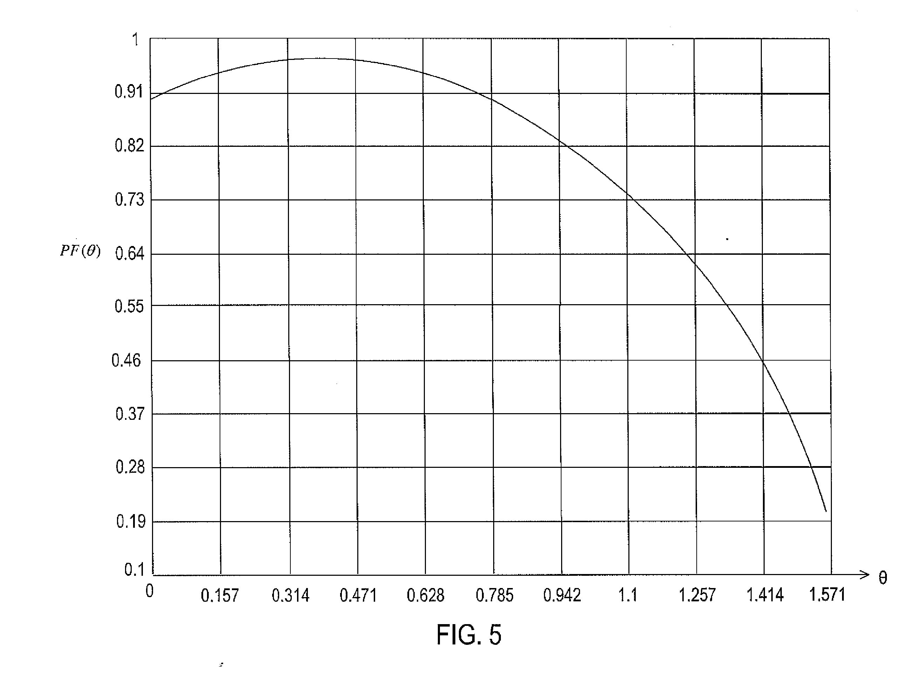

FIG. 5 shows the relationship between the power factor PF and the conduction angle $\theta$, in accordance with one embodiment of the present invention. Advantageously, as shown in FIG. 4 and FIG. 5, the driving circuit can achieve relatively high power efficiency $\eta$ and also relatively high power factor PF by selecting a proper conduction angle $\theta$. For example, if the conduction angle $\theta$ is 0.81, the power efficiency $\eta$ is approximately 80% and the power factor PF is approximately 0.89. Moreover, the driving circuit can achieve relatively high power factor without additional power factor correction circuit which may include inductors, power switches and control circuitry.

In one embodiment, the switch Q1 and the operational amplifier 206 constitute a controller and can be integrated in an integrated circuit 230. Moreover, the rectifier 204, the integrated circuit 230, and the sensing resistor $R_{SET}$ can be mounted on a printed circuit board (PCB). The light source such as the LED array 210 shown in FIG. 2 can be mounted on a separate PCB, in one embodiment.

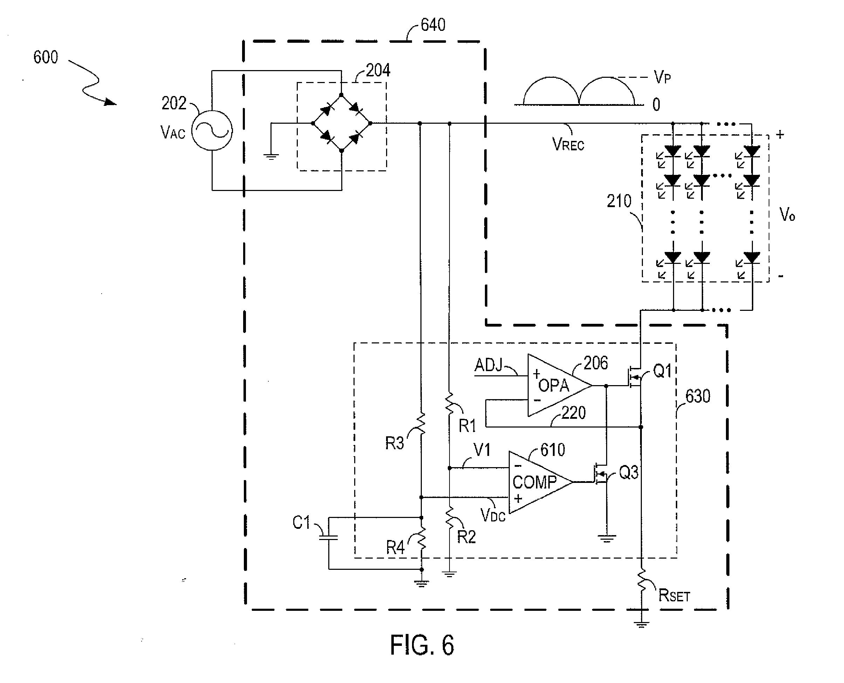

FIG. 6 shows a driving circuit 600, in accordance with another embodiment of the present invention. Elements labeled the same as in FIG. 2 have similar functions. The driving circuit 600 includes an AC/DC linear converter 640 which further includes the control circuitry to control the switch Q1. In one embodiment, the LED light source 210 is powered on and regulated when a signal indicative of the rectified AC voltage $V_{REC}$ is greater than a DC voltage, and the LED light source 210 is powered off when the signal indicative of the rectified AC voltage $V_{REC}$ is less than the DC voltage.

More specifically, the output of the operational amplifier 206 controls the switch Q1 linearly when a signal $V_1$ indicative of the rectified AC voltage $V_{REC}$ is greater than a DC voltage $V_{DC}$. The output operational amplifier 206 is held to a low voltage, thereby turning off the switch Q1 when the signal $V_1$ indicative of the rectified AC voltage $V_{REC}$ is less than the DC voltage $V_{DC}$, in one embodiment. In the example of FIG. 6, the AC/DC linear converter 640 further includes a comparator 610 for comparing the signal $V_1$ to the DC voltage $V_{DC}$ to control a switch Q3 coupled to the operational amplifier 206. The signal $V_1$ is proportional to the rectified AC voltage $V_{REC}$. For example, the driving circuit 600 includes a voltage divider including resistors R1 and R2 for receiving the rectified AC voltage $V_{REC}$ and providing the signal $V_1$. In one embodiment, the DC voltage $V_{DC}$ is proportional to an average level of the rectified AC voltage $V_{REC}$. For example, the driving circuit 600 includes a voltage divider including resistors R3 and R4. An average filtering capacitor C1 is coupled to the resistor R4 in parallel. Thus, the DC voltage $V_{DC}$ is proportional to an average level of the rectified AC voltage $V_{REC}$, in one embodiment. In the embodiment, when the voltage $V_1$ is greater than the DC voltage $V_{DC}$, the comparator 610 turns off the switch Q3 such that the output of the operational amplifier 206 controls the switch Q1 linearly. When the voltage $V_1$ is less than the DC voltage $V_{DC}$, the comparator 610 turns on the switch Q3 such that the output of the operational amplifier 206 is grounded and thus the switch Q1 is turned off. Advantageously, the driving circuit 600 is capable of controlling the LED array 210 to generate substantially constant brightness even if the input AC voltage $V_{AC}$ fluctuates.

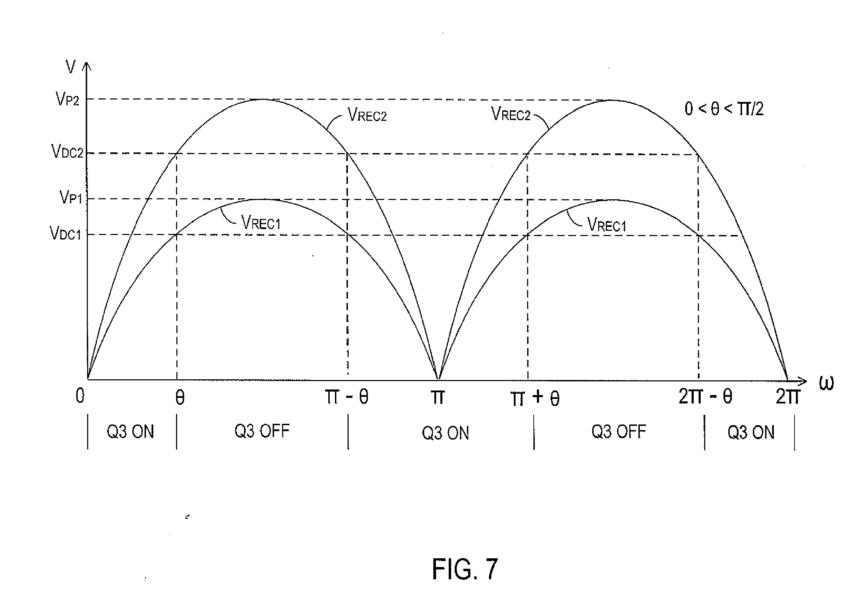

FIG. 7 shows an example of a rectified AC voltage $V_{REC1}$ and a rectified AC voltage $V_{REC2}$ during the period 0 to $2\pi$, and is described in combination with FIG. 6. In one embodiment, the rectified AC voltage $V_{REC1}$ and $V_{REC2}$ are periodic voltage signals, e.g., half-wave sinusoidal voltage signals. By way of example, if the input AC voltage $V_{AC}$ fluctuates from $V_{AC1}$ to $V_{AC2,}$ the rectified AC voltage varies from $V_{REC1}$ to $V_{REC2}$ accordingly. The rectified AC voltage $V_{REC1}$ has a peak value $V_{P1}$ and the rectified AC voltage $V_{REC2}$ has a peak value $V_{P2}$. Since the DC voltage $V_{DC}$ is proportional to an average level of the rectified AC voltage $V_{REC}$, the DC voltage also varies from $V_{DC1}$ to $V_{DC2}$ accordingly. Advantageously, as shown in the example of FIG. 7, the switch Q3 is turned on during $0\sim\theta$, $(\pi-\theta)\sim(\pi+\theta)$, and $(2\pi-\theta)\sim2\pi$, and the switch Q3 is turned off during $\theta\sim(\pi-\theta)$ and $(\pi+\theta)\sim(2\pi-\theta)$ regardless of whether the rectified AC voltage is $V_{REC1}$ or $V_{REC1}$. In one embodiment, when the switch Q3 is on, the switch Q1 is off, and when the switch Q3 is off, the switch Q1 is controlled linearly to regulate the current through the LED array 210 by comparing the reference signal ADJ to the sensing signal 220. In other words, even if the rectified AC voltage $V_{REC}$ varies which is caused by the fluctuation of the input AC voltage $V_{AC}$, the switch Q1 is still conducted at the same conduction angle such that the LED array 210 has substantially constant brightness.

In the example of FIG. 6, the DC voltage $V_{DC}$ can be given by:

$$V_{DC} = \frac{2}{\pi}V_p \times \frac{R4}{R3+R4} , \qquad\qquad (11)$$

where R3 represents the resistance of the resistor R3, and R4 represents the resistance of the resistor R4. By way of example, the voltage divider R3 and R4 is chosen in a way to suit integrated circuit design such as 2.0V DC voltage at the non-inverting input of the comparator 610, e.g., $V_{DC}$=2.0V. Assuming that the peak voltage $V_P$ of the rectified AC voltage $V_{REC}$ is 155V, the proportional R3 and R4 divider can be obtained by the following:

$$2 = \frac{2}{\pi} \times 155 \times \frac{R4}{R3+R4} \Rightarrow \frac{R4}{R3+R4} = \frac{\pi}{155} = 0.02. \qquad\qquad (12)$$

Knowing that switch Q1 is on when the rectified AC voltage $V_{REC}$ is greater than the forward voltage $V_O$ of the LED array 210, the voltage $V_1$ at the inverting input of comparator 610 is a fraction of $V_{REC}$ by properly choosing the resistor divider including the resistors R1 and R2. Assuming that the forward voltage $V_O$ of the LED array 210 is 112V and the peak voltage $V_P$ of the rectified AC voltage $V_{REC}$ is 155V, the proportional R1 and R2 divider can be obtained by the following:

$$\frac{R2}{R1+R2} = \frac{2.0}{112} = 0.0178. \qquad\qquad (13)$$

Assuming that due to the variation of the AC voltage $V_{AC}$, the peak voltage $V_P$ of the rectified AC voltage $V_{REC}$ is changed from 155V to 180V. According to equation (11), the DC voltage $V_{DC}$ is changed to:

$$V_{DC} = \frac{2}{\pi} \times \frac{R4}{R3+R4} \times 180 = 2.322V. \qquad\qquad (14)$$

According to equation (2), $Sin\theta = \dfrac{V_{DC}}{V_P} \times \dfrac{R1+R2}{R2}$ . Thus, $\theta\approx0.81$ (46.43 degree), which is the same as the conduction angle when the peak voltage $V_P$ of the rectified AC voltage $V_{REC}$ is equal to 155V. By switching on the switch Q1 at the same conduction angle $\theta$ even when the rectified AC voltage $V_{REC}$ varies, the brightness of the LED array 210 is therefore maintained substantially constant.

Referring to FIG. 2, if the peak voltage $V_P$ of the rectified AC voltage $V_{REC}$ is changed from 155V to 180V due to the variation of the AC voltage $V_{AC}$, then the conduction angle $\theta$ is approximately 0.67 (38.48 degree) according to the following:

$$V_0 = V_p \times Sin\theta \Rightarrow 112V = 180V \times \sin\theta \Rightarrow \theta = 0.67. \tag{15}$$

Thus, if the driving circuit 200 in FIG. 2 is employed, the output power $P_{out}$ can be given by:

$$\begin{aligned} P_{out} &= I_0 \times V_0 \times (1 - \frac{2 \times \theta}{\pi}) \\ &= I_0 \times 155 \times (1 - \frac{2 \times 0.67}{\pi}) \\ &= 5.75 Watts, \end{aligned} \tag{16}$$

which indicates that the brightness varies if the peak voltage $V_P$ of the rectified AC voltage $V_{REC}$ is changed from 155V to 180V due to the variation of the AC voltage $V_{AC}$. Moreover, the power dissipation can be obtained by:

$$P_{loss} = P_{in} - P_{out} = [(1/\eta) - 1]P_{out} = 2.35 \text{ Watts.} \tag{17}$$

By employing the driving circuit 600 in FIG. 6, the power efficiency is further enhanced. For example, by employing the driving circuit in FIG. 6, the power loss when the rectified voltage is $V_{REC2}$ having a peak voltage of 180V is:

$$\begin{aligned} P_{loss} &= P_{in} - P_{out} \\ &= \frac{1}{\pi} \times I_0 \times V_p \times 2 \times \cos\theta - 5 Watts \\ &= \frac{1}{\pi} \times I_0 \times 180 \times 2 \times \cos(0.81) - 5 Watts \\ &= 2.27 Watts. \end{aligned} \tag{18}$$

In one embodiment, the switches Q1 and Q3, the operational amplifier 206, the comparator 610 and the resistors R1, R2, R3 and R4 constitute a controller and can be integrated in an integrated circuit 630. In another embodiment, resistors R1 and/or R3 can be outside the integrated circuit for design flexibility. Moreover, the rectifier 204, the filtering capacitor C1, the sensing resistor $R_{SET}$, and the integrated circuit 630 can be mounted on a printed circuit board (PCB). The light source such as the LED array 210 shown in FIG. 6 can be mounted on a separate PCB, in one embodiment.

Accordingly, embodiments in accordance with the present invention provide circuits and methods for driving one or more light sources such as a light-emitting diode (LED) light source. Advantageously, the driving circuits employ an AC/DC linear converter, which achieves relatively high power efficiency and power factor, and also relatively small size and low cost unlike the conventional light source driving circuits which may require switching-mode DC/DC converters including bulky inductors, capacitors and switching devices. Moreover, the AC/DC linear converter in accordance with embodiments of the present invention does not generate electromagnetic interference (EMI) noise, and thus does not require EMI filters. Due to the relatively small size, the driving circuits in accordance with embodiments of the present invention can be used in lighting fixtures including, but are not limited to E12, E14, E17 light bulbs or T-5 and T-8 tubes.

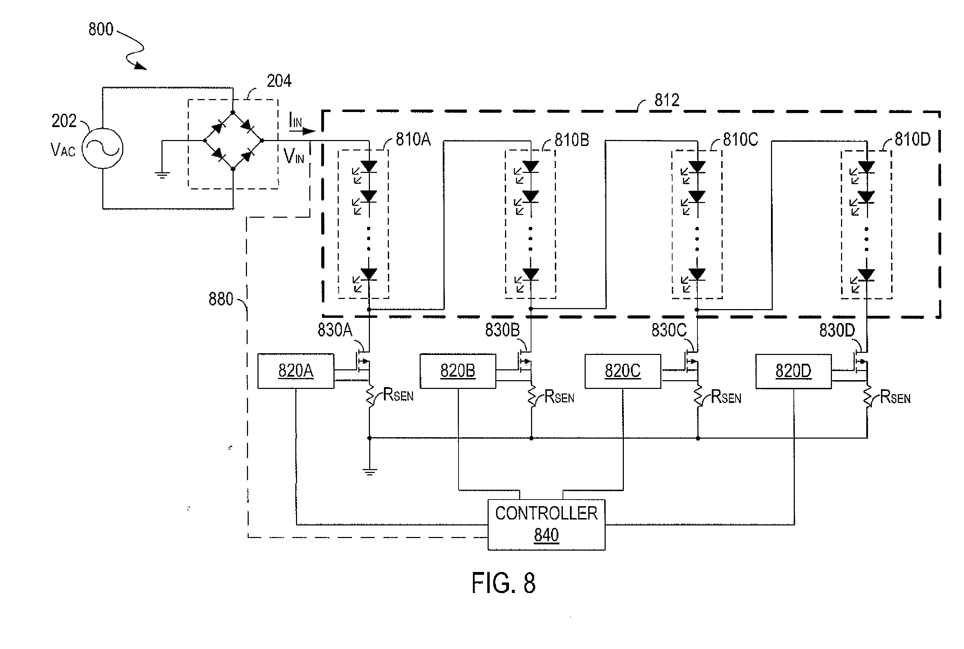

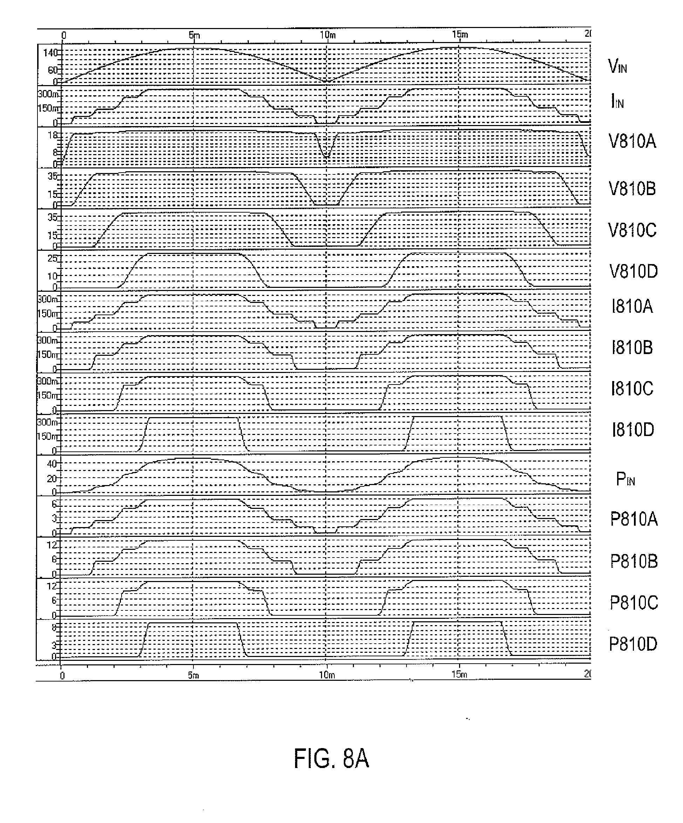

FIG. 8 to FIG. 15 set forth additional embodiments in accordance with the present invention, which provide circuits for driving a light source, e.g., an LED light source.

FIG. 8 shows a driving circuit 800, in accordance with another embodiment of the present invention. The driving circuit 800 includes a rectifier 204, e.g., a bridge rectifier, current regulators 820A-820D, a controller 840, and a load such as an LED array 812 powered by a rectified AC voltage generated by the rectifier 204.

The rectifier 204 is operable for receiving an AC input voltage from the AC power source 202 and for generating a rectified AC voltage $V_{IN}$. The rectified AC voltage $V_{IN}$ can have a heaviside sinusoidal waveform. In one embodiment, a filtering capacitor, e.g., 0.1 u, can be coupled to the output of the rectifier 204 to smooth the rectified voltage $V_{IN}$. In the example of FIG. 8, the LED array 812 receives the rectified AC voltage $V_{IN}$, and includes LED strings 810A-810D. Each of LED strings 810A-810D can have a plurality of series-coupled LEDs. By way of example, the LED string 810A can have 6 LEDs, the LED string 810B can have 12 LEDs, the LED string 810C can have 12 LEDs, and the LED string 810D can have 8 LEDs. Each of the LED strings 810A-810D is coupled to a corresponding switch 830A-830D in series. Each of the current regulators 820A-820D senses a current flowing through a corresponding LED string via a sense resistor $R_{SEN}$, and regulates the current through the corresponding LED string to a predetermined level by controlling a corresponding switch linearly. The controller 840 controls the current regulators 820A-820D to regulate the current $I_{IN}$ to the LED array 812. Advantageously, the controller 840 is operable for wave-shaping the current $I_{IN}$ such that the power factor of the driving circuit 800 is enhanced.

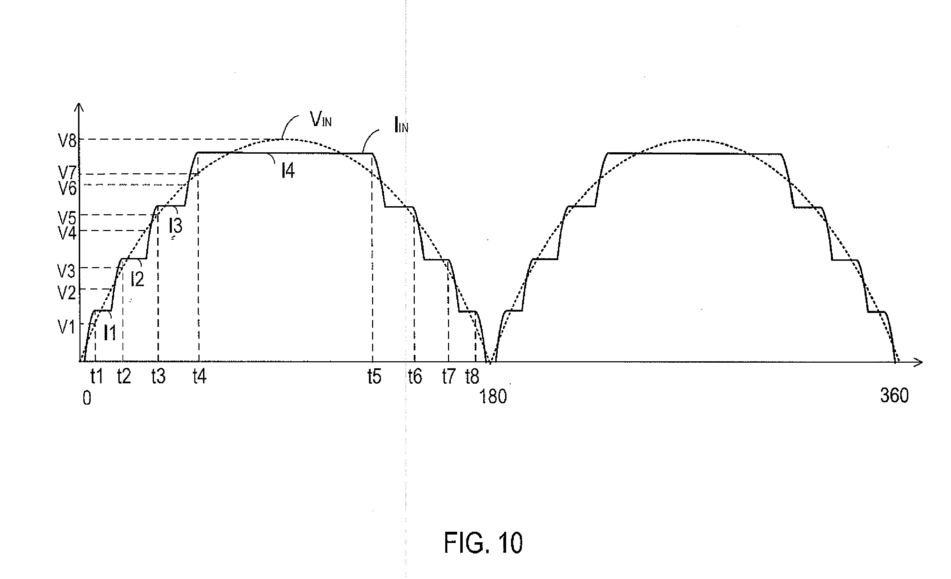

FIG. 10 shows an example of the rectified voltage $V_{IN}$ and a current $I_{IN}$ flowing from the rectifier 204 to the LED array 812. FIG. 10 is described in combination with FIG. 8. In operation, before the voltage across the corresponding LED string reaches a corresponding forward voltage of that LED string, the current flowing through the LED string increases exponentially according to the LED current-voltage characteristics. In one embodiment, when the voltage across the LED string is greater than the corresponding forward voltage of that LED string, a corresponding current regulator 820A-820D regulates the current through the LED string to a predetermined level.

The LED string 810A receives the rectified AC voltage $V_{IN}$. Ignoring the resistance of the sense resistor $R_{SEN}$ and the on-resistance of the switch 830A, when the rectified AC voltage $V_{IN}$ is less than the forward voltage of the LED string 810A, the current through the LED string 810A increases exponentially. At time t1, the rectified AC voltage $V_{IN}$ is greater than the forward voltage of the LED string 810A. The controller 840 enables the current regulator 820A to control the switch 830A linearly to regulate the current through the LED string 810A to a first predetermined level I1. Accordingly, the voltage at the cathode end of the LED string 810A increases. At certain point between t1 and t2, a current through the LED string 810B begins to increase exponentially. Therefore, the current $I_{IN}$ flowing from the rectifier 204 to the LED array 812 includes the regulated current I1 through the LED string 810A and the exponentially increased current through the LED string 810B.

At time t2, the rectified AC voltage $V_{IN}$ is greater than the forward voltages of the LED strings 810A and 810B. The controller 840 controls the current regulator 820A to turn off the switch 830A, and enables the current regulator 820B to control the switch 830B linearly to regulate the current through the series-coupled LED strings 810A and 810B to a second predetermined level 12 (12>11). As the voltage at the cathode end of the LED string 810B increases, a current through the LED string 810C begins to increase exponentially at certain point between t2 and t3. Therefore, the current $I_{IN}$ flowing from the rectifier 204 to the LED array 812 includes the regulated current 12 through the series-coupled LED strings 810A-810B and the exponentially increased current through the LED string 810C.

At time t3, the rectified AC voltage $V_{IN}$ is greater than the forward voltages of the LED strings 810A, 810B and 810C. The controller 840 controls the current regulator 820B to turn off the switch 830B, and enables the current regulator 820C to control the switch 830C linearly to regulate the current through the series-coupled LED strings 810A, 810B and 810C to a third predetermined level 13 (13>12). As the voltage at the cathode end of the LED string 810C increases, a current through the LED string 810D begins to increase exponentially at certain point between t3 and t4. Therefore, the current $I_{IN}$ flowing from the rectifier 204 to the LED array 812 includes the regulated current 13 through the series-coupled LED strings 810A-810C and the exponentially increased current through the LED string 810D.

At time t4, the rectified AC voltage $V_{IN}$ is greater than the forward voltages of the LED strings 810A, 810B, 810C and 810D. The controller 840 controls the current regulator 820C to turn off the switch 830C, and enables the current regulator 820D to control the switch 830D linearly to regulate the current through the series-coupled LED strings 810A, 810B, 810C and 810D to a fourth predetermined level 14 (14>13). To this end, all the LED strings 810A-810D are turned on. Therefore, the current $I_{IN}$ flowing from the rectifier 204 to the LED array 812 includes the regulated current I4 through the series-coupled LED strings 810A-810D.

At time t5, the rectified AC voltage $V_{IN}$ drops below the forward voltages of the LED strings 810A, 810B, 810C and 810D. As such, the controller 840 enables the current regulator 820C to turn on the switch 830C, and enables the current regulator 820C to control the switch 830C linearly to regulate the current through the series-coupled LED strings 810A, 810B and 810C to the third predetermined level I3. Therefore, the current $I_{IN}$ flowing from the rectifier 204 to the LED array 812 includes the regulated current I3 through the series-coupled LED strings 810A-810C and the exponentially decreased current through the LED string 810D.

At time t6, the rectified AC voltage $V_{IN}$ drops below the forward voltages of the LED strings 810A, 810B and 810C. As such, the controller 840 enables the current regulator 820B to turn on the switch 830B and control the switch 830B linearly to regulate the current through the series-coupled LED strings 810A and 810B to the second predetermined level I2. Therefore, the current $I_{IN}$ flowing from the rectifier 204 to the LED array 812 includes the regulated current I2 through the series-coupled LED strings 810A-810B and the exponentially decreased current through the LED string 810C.

At time t7, the rectified AC voltage $V_{IN}$ drops below the forward voltages of the LED strings 810A and 810B. As such, the controller 840 enables the current regulator 820A to turn on the switch 830A and control the switch 830A linearly to regulate the current through the LED strings 810A to the first predetermined level I1. Therefore, the current $I_{IN}$ flowing from the rectifier 204 to the LED array 812 includes the regulated current I1 through the LED string 810A and the exponentially decreased current through the LED string 810B.

At time t8, the rectified AC voltage $V_{IN}$ drops below the forward voltage of the LED string 810A. Thus, the current through the LED string 810A drops exponentially.

Accordingly, the current regulators 820A-820D are enabled sequentially, depending on the level of the rectified AC voltage $V_{IN}$, to regulate a corresponding switch linearly to control the current flowing through the switch to a respective predetermined level. When the rectified AC voltage $V_{IN}$ is within a first predetermined range (V1 <$V_{IN}$<V2), the controller 840 controls the current regulator 820A to regulate a current flowing through the LED string 810A to a first predetermined level I1 by controlling the switch 830A linearly. The LED strings 810B-810D are off.

When the rectified AC voltage $V_{IN}$ is within a second predetermined range (V3<$V_{IN}$<V4), the controller 840 controls the current regulator 820B to regulate a current flowing through the series-coupled LED strings 810A and 810B to a second predetermined level I2 by controlling the switch 830B linearly. The switch 830A is turned off. The LED strings 810C and 810D are off.

When the rectified AC voltage $V_{IN}$ is within a third predetermined range (V5<$V_{IN}$<V6), the controller 840 controls the current regulator 820C to regulate a current flowing through the series-coupled LED strings 810A-810C to a third predetermined level I3 by controlling the switch 830C linearly. The switches 830A and 830B are turned off. The LED string 810D is off.

When the rectified AC voltage $V_{IN}$ is within a fourth predetermined range (V7<$V_{IN}$<V8), the controller 840 controls the current regulator 820D to regulate a current flowing through the series-coupled LED strings 810A-810D to a fourth predetermined level I4 by controlling the switch 830D linearly. The switches 830A, 830B and 830C are turned off. To this end, the current $I_{IN}$ from the rectifier 204 flows though all the LED strings 810A-810D.

In one embodiment, the controller 840 receives a monitoring signal 880 from the rectifier 204, which indicates a level of the rectified AC voltage $V_{IN}$. Accordingly, the controller 840 can control the current regulators 820A-820D according to the monitoring signal 880. In an alternative embodiment, the controller 840 does not need to receive the monitoring signal 880. Instead, the controller 840 can monitor the statuses of the LED strings 810A-810D (for example, whether a voltage across the LED string exceeds a forward voltage of the LED string) to control the current regulators 820A-820D.

FIG. 8A shows examples of the signal waveforms associated with the driving circuit 800, in accordance with one embodiment of the present invention. More specifically, FIG. 8A shows the rectified AC voltage $V_{IN}$, the current $I_{IN}$ from the rectifier 204 to the LED array 812, the voltages V810A, V810B, V810C and V810D across the LED strings 810A, 810B, 810C and 810D respectively, the currents 1810A, 1810B, 1810C and 1810D flowing through the LED strings 810A, 810B, 810C and 810D respectively, the input power $P_{IN}$, and the power P810A, P810B, P810C and P810D consumed by the LED strings 810A, 810B, 810C and 810D respectively. Advantageously, the power factor of the driving circuit 800 reaches 99%, and the total harmonic distortion of $I_{IN}$ is 9.26%, in one embodiment.

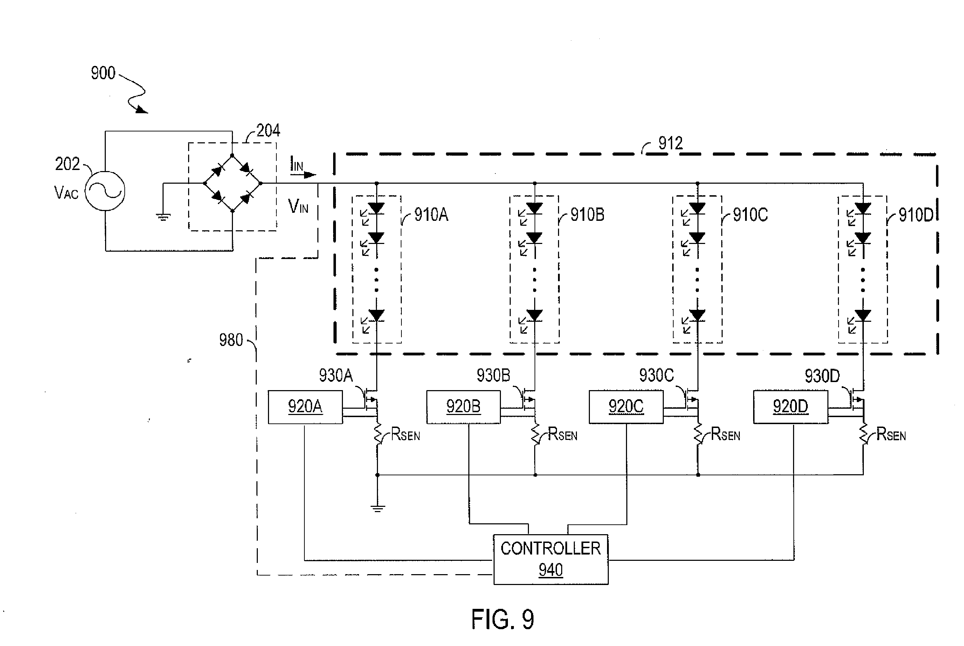

FIG. 9 shows a driving circuit 900, in accordance with another embodiment of the present invention. The driving circuit 900 includes a rectifier 204, current regulators 920A-920D, a controller 940, and a load such as an LED array 912.

In the example of FIG. 9, the LED array 912 includes LED strings 910A-910D, and each of the LED string receives the rectified AC voltage $V_{IN}$. In one embodiment, the number of the LEDs in the LED string 910B is greater than those in the LED string 910A, the number of the LEDs in the LED string 910C is greater than those in the LED string 910B, and the number of the LEDs in the LED string 910D is greater than those in the LED string 910C. By way of example, the LED string 910A can have 6 LEDs, the LED string 910B can have 18 LEDs, the LED string 910C can have 30 LEDs, and the LED string 910D can have 38 LEDs. Each of the LED strings 910A-910D is coupled to a corresponding switch 930A-930D in series. Each of the current regulators 920A-920D senses a current flowing through a corresponding LED string via a sense resistor $R_{SEN}$, and regulates the current through the corresponding LED string to a predetermined level by controlling a corresponding switch linearly. The controller 940 controls the current regulators 920A-920D to regulate the current $I_{IN}$ to the LED array 912. Advantageously, the controller 940 is operable for wave-shaping the current $I_{IN}$ such that the power factor of the driving circuit 900 is enhanced.

FIG. 9 is described in combination with FIG. 10. Ignoring the resistance of the sense resistor $R_{SEN}$ and the on-resistance of the switch 930A, when the rectified AC voltage $V_{IN}$ is less than the forward voltage of the LED string 910A, the current through the LED string 910A increases exponentially. At time t1, the rectified AC voltage $V_{IN}$ is greater than the forward voltage of the LED string 910A. The controller 940 enables the current regulator 920A to control the switch 930A linearly to regulate the current through the LED string 910A to a first predetermined level I1. Because the LED strings 910B-910D have more LEDs, the LED strings 910B-91 0D still remain off. As the rectified AC voltage $V_{IN}$ increases, at certain point between t1 and t2, a current through the LED string 910B begins to increase exponentially. Therefore, the current $I_{IN}$ flowing from the rectifier 204 to the LED array 912 includes the regulated current I1 through the LED string 910A and the exponentially increased current through the LED string 910B.

At time t2, the rectified AC voltage $V_{IN}$ is greater than the forward voltage of the LED string 910B. The controller 940 controls the current regulator 920A to turn off the switch 930A, and enables the current regulator 920B to control the switch 930B linearly to regulate the current through the LED string 910B to a second predetermined level I2. Because the LED strings 910C-910D have more LEDs, the LED strings 910C-910D still remain off. As the rectified AC voltage $V_{IN}$ increases, a current through the LED string 910C begins to increase exponentially at certain point between t2 and t3. Therefore, the current $I_{IN}$ flowing from the rectifier 204 to the LED array 912 includes the regulated current I2 through the LED string 910B and the exponentially increased current through the LED string 910C.

At time t3, the rectified AC voltage $V_{IN}$ is greater than the forward voltage of the LED string 910C. The controller 940 controls the current regulator 920B to turn off the switch 930B, and enables the current regulator 920C to control the switch 930C linearly to regulate the current through the LED string 810C to a third predetermined level I3. Because the LED string 910D has more LEDs, the LED string 910D still remains off. As the rectified AC voltage $V_{IN}$ increases, a current through the LED string 910D begins to increase exponentially at certain point between t3 and t4. Therefore, the current $I_{IN}$ flowing from the rectifier 204 to the LED array 912 includes the regulated current I3 through the LED string 910C and the exponentially increased current through the LED string 910D.

At time t4, the rectified AC voltage $V_{IN}$ is greater than the forward voltage of the LED string 910D. The controller 940 controls the current regulator 920C to turn off the switch 930C, and enables the current regulator 920D to control the switch 930D linearly to regulate the current through the LED string 910D to a fourth predetermined level I4. Therefore, the current $I_{IN}$ flowing from the rectifier 204 to the LED array 912 includes the regulated current I4 through the LED string 910D.

At time t5, the rectified AC voltage $V_{IN}$ drops below the forward voltage of the LED string 910D, and thus the current through the LED string 910D drops exponentially. The controller 940 enables the current regulator 920C to turn on the switch 930C and to control the switch 930C linearly to regulate the current through the LED string 910C to the third predetermined level I3. Therefore, the current $I_{IN}$ flowing from the rectifier 204 to the LED array 912 includes the regulated current I3 through the LED string 910C and the exponentially decreased current through the LED string 910D.

At time t6, the rectified AC voltage $V_{IN}$ drops below the forward voltage of the LED string 910C, and thus the current through the LED string 910C drops exponentially. The controller 940 enables the current regulator 920B to turn on the switch 930B and control the switch 930B linearly to regulate the current through the LED string 910B to the second predetermined level I2. Therefore, the current $I_{IN}$ flowing from the rectifier 204 to the LED array 912 includes the regulated current I2 through the LED string 910B and the exponentially decreased current through the LED string 910C.

At time t7, the rectified AC voltage $V_{IN}$ drops below the forward voltage of the LED string 910B, and thus the current through the LED string 910B drops exponentially. The controller 940 enables the current regulator 920A to turn on the switch 930A and control the switch 930A linearly to regulate the current through the LED strings 910A to the first predetermined level I1. Therefore, the current $I_{IN}$ flowing from the rectifier 204 to the LED array 912 includes the regulated current I1 through the LED string 910A and the exponentially decreased current through the LED string 910B.

At time t8, the rectified AC voltage $V_{IN}$ drops below the forward voltage of the LED string 910A. Thus, the current through the LED string 910A drops exponentially.

Accordingly, the current regulators 920A-920D are enabled sequentially, depending on the level of the rectified AC voltage $V_{IN}$, to regulate a corresponding switch linearly to control the current flowing through the switch to a respective predetermined level. When the rectified AC voltage $V_{IN}$ is within a first predetermined range (V1 <$V_{IN}$<V2), the controller 940 controls the current regulator 920A to regulate a current flowing through the LED string 910A to a first predetermined level I1 by controlling the switch 930A linearly. The LED strings 810B-810D are off.

When the rectified AC voltage $V_{IN}$ is within a second predetermined range (V3<$V_{IN}$<V4), the controller 940 controls the current regulator 920B to regulate a current flowing through the LED string 910B to a second predetermined level I2 by controlling the switch 930B linearly. The switch 930A is turned off. The LED strings 910A, 910C and 910D are off.

When the rectified AC voltage $V_{IN}$ is within a third predetermined range (V5<$V_{IN}$<V6), the controller 940 controls the current regulator 920C to regulate a current flowing through the LED string 910C to a third predetermined level I3 by controlling the switch 930C linearly. The switches 930A and 930B are turned off. The LED strings 910A, 910B and 910D are off.

When the rectified AC voltage $V_{IN}$ is within a fourth predetermined range (V7<$V_{IN}$<V8), the controller 940 controls the current regulator 920D to regulate a current flowing through the LED string 910D to a fourth predetermined level I4 by controlling the switch 930D linearly. The switches 930A, 930B and 930C are turned off. The LED strings 910A, 910B and 910C are off.

In one embodiment, the controller 940 receives a monitoring signal 980 from the rectifier 204, which indicates a level of the rectified AC voltage $V_{IN}$. Accordingly, the controller 940 can control the current regulators 920A-920D according to the monitoring signal 980. In an alternative embodiment, the controller 940 does not need to receive the monitoring signal 980. Instead, the controller 940 can monitor the statuses of the LED strings 910A-910D (for example, whether a voltage across the LED string exceeds a forward voltage of the LED string) to control the current regulators 920A-920D.

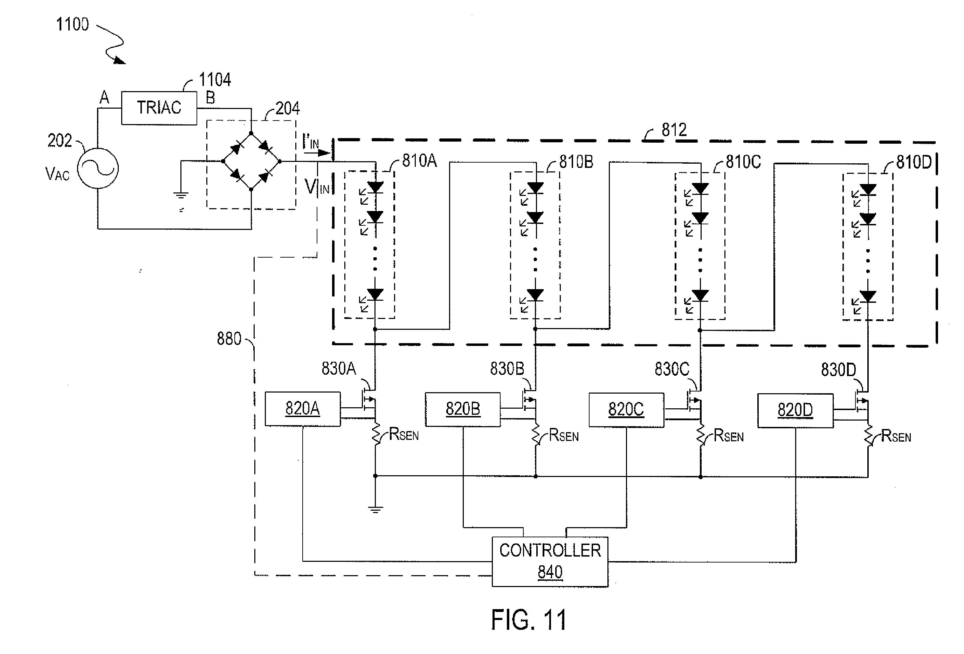

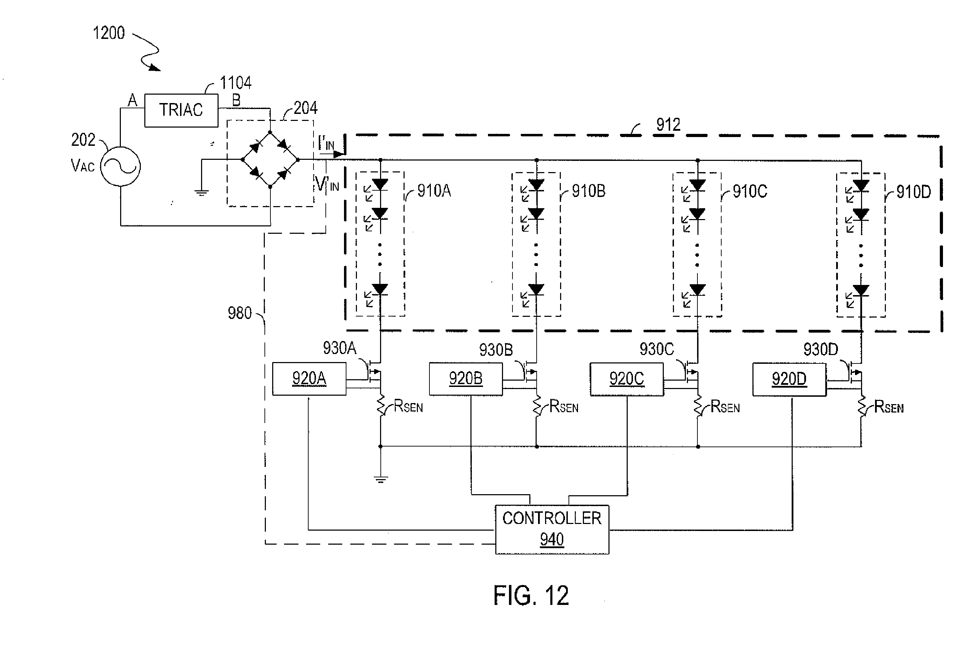

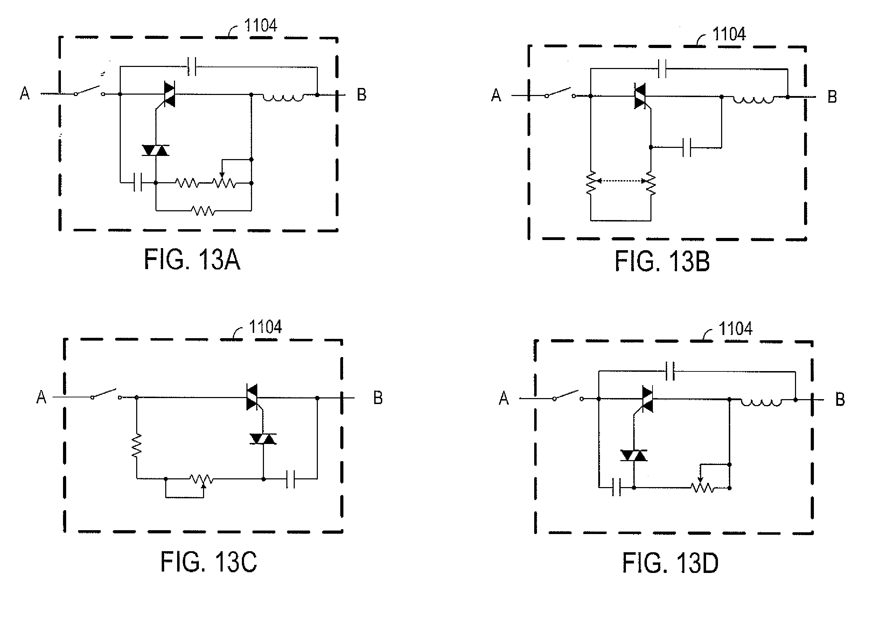

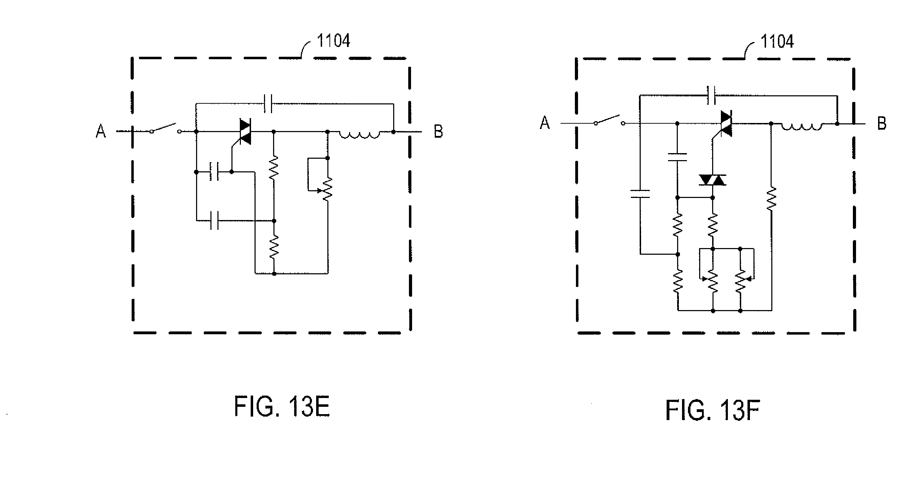

FIG. 11 shows a driving circuit 1100, in accordance with another embodiment of the present invention. The driving circuit 1100 in FIG. 11 is similar to the driving circuit 800 in FIG. 8, except that the driving circuit 1100 further includes a TRIAC dimmer 1104 coupled between the AC power source 202 and the rectifier 204. FIG. 12 shows a driving circuit 1200, in accordance with another embodiment of the present invention. The driving circuit 1200 in FIG. 12 is similar to the driving circuit 900 in FIG. 9, except that the driving circuit 1200 further includes a TRIAC dimmer 1104 coupled between the AC power source 202 and the rectifier 204. FIG. 13A-FIG. 13F show examples of the TRIAC dimmer 1104.

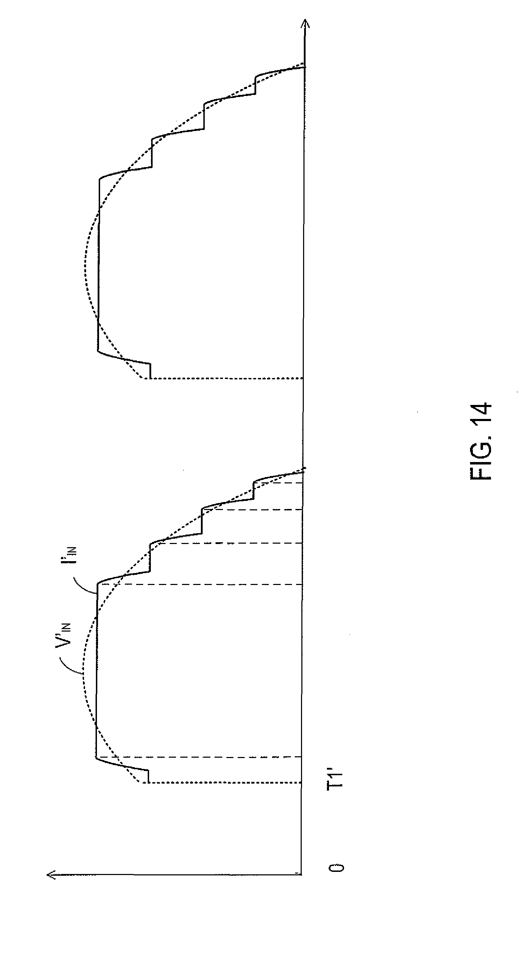

FIG. 14 shows an example of the rectified voltage $V'_{IN}$ and a current $I'_{IN}$ flowing from the rectifier 204 to the LED array 812 when the TRIAC dimmer 1104 is used. FIG. 14 is described in combination with FIG. 11 and FIG. 12. As shown in FIG. 14, the rectified AC voltage $V'_{IN}$ has a notch cut depending upon the adjustment of the TRIAC dimmer 1104. The driving circuit 1100 in FIG. 11 operates similarly as the driving circuit 800 in FIG. 8, except that during time 0-T1', the rectified AC voltage $V'_{IN}$ is zero and no current flows through the LED array 812. The driving circuit 1200 in FIG. 12 operates similarly as the driving circuit 900 in FIG. 9, except that during time 0-T1', the rectified AC voltage $V'_{IN}$ is zero and no current flows through the LED array 912. Advantageously, the present invention provides an enhanced power factor even when a conventional TRIAC dimmer is used.

Advantageously, the driving circuits drive the light source by a rectified AC voltage without bulky energy storage component such as electrolytic capacitors or inductors. The driving circuits provide a wave-shaping function that enhances the power factor of the driving circuits without additional power factor correction circuits. Moreover, unlike the conventional AC/DC converter cooperating with the switching-mode DC/DC converter, the driving circuits in the present invention provide wave-shaping capabilities, avoiding electromagnetic interference (EMI) noises.

While the foregoing description and drawings represent embodiments of the present invention, it will be understood that various additions, modifications and substitutions may be made therein without departing from the spirit and scope of the principles of the present invention as defined in the accompanying claims. One skilled in the art will appreciate that the invention may be used with many modifications of form, structure, arrangement, proportions, materials, elements, and components and otherwise, used in the practice of the invention, which are particularly adapted to specific environments and operative requirements without departing from the principles of the present invention. The presently disclosed embodiments are therefore to be considered in all respects as illustrative and not restrictive, the scope of the invention being indicated by the appended claims and their legal equivalents, and not limited to the foregoing description.

**Claims**

1. A circuit for powering a light source comprising a first plurality of LEDs and a second plurality of LEDs, said circuit comprising:

    a rectifier that receives an AC voltage and provides a rectified AC voltage to said first plurality of LEDs and said second plurality of LEDs;
    a first current regulator coupled to said first plurality of LEDs;
    a second current regulator coupled to said second plurality of LEDs;
    a controller that enables said first current regulator to regulate a current flowing through said first plurality of LEDs to a first predetermined level when said rectified AC voltage is within a first predetermined range, wherein said second plurality of LEDs remain off when said rectified AC voltage is within said first predetermined range.

2. The circuit of claim 1, wherein said controller regulates a current flowing through said first plurality of LEDs and said second plurality of LEDs to a second predetermined level greater than said first predetermined level when said rectified AC voltage is within a second predetermined range, wherein said first plurality of LEDs and said second plurality of LEDs are coupled in series when said rectified AC voltage is within said second predetermined range, and wherein said second predetermined range is outside said first predetermined range.

3. The circuit of claim 2, further comprising:

    a switch coupled to said first plurality of LEDs in series,
    wherein said controller controls said switch linearly to regulate said current flowing through said first plurality of LEDs to said first predetermined level when said rectified AC voltage is within said first predetermined range, and wherein said controller turns off said switch when said rectified AC voltage is within said second predetermined range.

4. The circuit of claim 2, further comprising:

a switch coupled to said second plurality of LEDs in series,
wherein said controller controls said switch linearly to regulate said current flowing through said first plurality of LEDs and said second plurality of LEDs to said second predetermined level when said rectified AC voltage is within said second predetermined range.

5. The circuit of claim 1, wherein said controller regulates a current flowing through said second plurality of LEDs to a second predetermined level greater than said first predetermined level when said rectified AC voltage is within a second predetermined range, wherein said controller turns off said first plurality of LEDs when said rectified AC voltage is within said second predetermined range, and wherein said second predetermined range is outside said first predetermined range.

6. The circuit of claim 5, further comprising:

a switch coupled to said first plurality of LEDs in series,
wherein said controller controls said switch linearly to regulate said current flowing through said first plurality of LEDs to said first predetermined level when said rectified AC voltage is within said first predetermined range, and wherein said controller turns off said switch when said rectified AC voltage is within said second predetermined range.

7. The circuit of claim 5, further comprising:

a switch coupled to said second plurality of LEDs in series,
wherein said second plurality of LEDs are coupled to a switch in series, wherein said controller controls said switch linearly to regulate said current flowing through said second plurality of LEDs to said second predetermined level when said rectified AC voltage is within said second predetermined range.

8. The circuit of any one of claims 1 to 7, wherein the number of LEDs in said second plurality of LEDs is greater than the number of LEDs in said first plurality of LEDs.

9. The circuit of any one of claims 1 to 8, wherein said rectified AC voltage is generated by a TRIAC dimmer.

10. The circuit of any one of claims 1 to 9, wherein said first current regulator senses a current flowing through said first plurality of LEDs and controls a switch linearly coupled to said first plurality of LEDs in series.

11. The circuit of any one of claims 1 to 10, wherein said second current regulator senses a current flowing through said second plurality of LEDs and controls a switch linearly coupled to said second plurality of LEDs in series.

12. A controller for controlling power to a light source, wherein said light source receives a rectified AC voltage and comprises a first plurality of LEDs and a second plurality of LEDs, wherein said controller regulates a current flowing through said first plurality of LEDs to a first predetermined level when said rectified AC voltage is within a first predetermined range, and wherein said second plurality of LEDs remain off when said rectified AC voltage is within said first predetermined range.

13. The controller of claim 12, wherein said controller regulates a current flowing through said first plurality of LEDs and said second plurality of LEDs to a second predetermined level greater than said first predetermined level when said rectified AC voltage is within a second predetermined range, wherein said first plurality of LEDs and said second plurality of LEDs are coupled in series when said rectified AC voltage is within said second predetermined range, and wherein said second predetermined range is outside said first predetermined range.

14. The controller of claim 13, wherein said first plurality of LEDs are coupled to a switch in series, wherein said controller controls said switch linearly to regulate said current flowing through said first plurality of LEDs to said first predetermined level when said rectified AC voltage is within said first predetermined range, and wherein said controller turns off said switch when said rectified AC voltage is within said second predetermined range.

15. The controller of claim 13, wherein said second plurality of LEDs are coupled to a switch in series, and wherein said controller controls said switch linearly to regulate said current flowing through said first plurality of LEDs and said second plurality of LEDs to said second predetermined level when said rectified AC voltage is within said second predetermined range.

16. The controller of claim 12, wherein said controller regulates a current flowing through said second plurality of LEDs to a second predetermined level greater than said first predetermined level when said rectified AC voltage is within a second predetermined range, wherein said controller turns off said first plurality of LEDs when said rectified AC voltage is within said second predetermined range, and wherein said second predetermined range is outside said first predetermined range.

17. The controller of claim 16, wherein said first plurality of LEDs are coupled to a switch in series, wherein said controller controls said switch linearly to regulate said current flowing through said first plurality of LEDs to said first predetermined level when said rectified AC voltage is within said first predetermined range, and wherein said controller turns off said switch when said rectified AC voltage is within said second predetermined range.

18. The controller of claim 16, wherein said second plurality of LEDs are coupled to a switch in series, and wherein said controller controls said switch linearly to regulate said current flowing through said second plurality of LEDs to said second predetermined level when said rectified AC voltage is within said second predetermined range.

19. The controller of any one of claims 12 to 18, wherein the number of LEDs in said second plurality of LEDs is greater than the number of LEDs in said first plurality of LEDs.

20. The controller of any one of claims 12 to 19 wherein said rectified AC voltage is generated by a TRIAC dimmer.

FIG. 1 PRIOR ART

EP 2 563 094 A2

FIG. 2

EP 2 563 094 A2

FIG. 3

EP 2 563 094 A2

FIG. 4

FIG. 5

FIG. 6

EP 2 563 094 A2

FIG. 7

EP 2 563 094 A2

FIG. 8

FIG. 8A

FIG. 9

EP 2 563 094 A2

FIG. 10

FIG. 11

FIG. 12

EP 2 563 094 A2

FIG. 13A

FIG. 13B

FIG. 13C

FIG. 13D

FIG. 13F

FIG. 13E

FIG. 14

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 95335310 A
- US 21875511 A
- US 96803510 A
- US 8040071 B